# EUROPEAN PATENT APPLICATION

(11) **EP 2 273 781 A1**
(43) Date of publication of application: **12.01.2011**
(21) Application number: 10166983.6
(22) Date of filing: 23.06.2010
(51) Int. Cl.: H04N 5/445, G06F 3/048

(54) **Method and apparatus for displaying electric program guide**

(30) Priority: 23.06.2009 KR 20090055806
(71) Applicant: SAMSUNG ELECTRONICS CO., LTD., Suwon-si, Gyeonggi-do (KR)
(72) Inventor: Kang, Young Seok, Gyeonggi-do (KR)
(74) Representative: Grünecker, Kinkeldey, Stockmair & Schwanhäusser Anwaltssozietät

(57) **Abstract**

In a display apparatus, an Electric Program Guide (EPG) is distinctively displayed to overlap with current broadcasting data being displayed. A method for displaying EPG includes determining whether an EPG display request signal is received while broadcasting data is displayed. When the EPG display request signal is received, at least one of brightness and chroma of a screen displaying the broadcasting data is modified. The EPG is displayed on the screen so that the displayed EPG has a different brightness or chroma than the modified brightness or chroma of the screen. This may improve recognizability and/or legibility of EPG by employing a modification in brightness or chroma when the EPG is displayed on current broadcasting data. For further improved recognizability and/or legibility, a border effect or a blur effect may be applied to a user's selected item in the displayed EPG.

## Description

### BACKGROUND OF THE INVENTION

### 1. Field of the Invention:

The present invention relates to a method and apparatus for displaying an Electric Program Guide (EPG). More particularly, the present invention relates to a display apparatus and method for distinctively displaying an EPG on broadcasting data being displayed.

### 2. Description of the Related Art:

As the use of digital broadcast services becomes more widespread, a function to display an Electric Program Guide (EPG) is increasing in desirability. An EPG is used with digital broadcast services to provide a user with continuously updated menus related to scheduling information for current and upcoming programs. A typical EPG contains broadcasting channels, titles, times of broadcast programs, detailed information about respective broadcast programs, and any other available contents. Such an EPG allows a user to navigate, search, select and reserve specific broadcast programs.

Normally an EPG is displayed while current broadcasting data is faded out. It is therefore difficult for a user to compare a displayed EPG with current broadcasting data. Alternatively, an EPG may be displayed to overlap with non-faded broadcasting data. This may, however, deteriorate the recognizability and/or legibility of a displayed EPG due to broadcasting data being displayed on a screen. Accordingly, there is a need for an advanced technique to improve recognizability and/or legibility as well as usability of an EPG in digital broadcast services.

### SUMMARY OF THE INVENTION

An aspect of the present invention is to address at least the above-mentioned problems and/or disadvantages and to provide at least the advantages described below. Accordingly, an aspect of the present invention is to improve recognizability and/or legibility of a displayed Electric Program Guide (EPG) which overlaps with current broadcasting data on a screen, wherein the broadcasting data is clearly distinguishable.

In accordance with an aspect of the present invention, a method for displaying an EPG on a display apparatus is provided. The method includes determining whether an EPG display request signal is received while broadcasting data is outputted, modifying at least one of brightness and chroma of a screen outputting the broadcasting data when the EPG display request signal is received, and displaying the EPG on the screen so that the displayed EPG has a different brightness or chroma than the modified brightness or chroma of the screen.

In accordance with another aspect of the present invention, a display apparatus is provided. The apparatus includes a display unit for simultaneously displaying broadcasting data and EPG data, a broadcast signal receiver for receiving a broadcast signal and for dividing the broadcast signal into the broadcasting data and the EPG data, a tuner for receiving the broadcasting data from the broadcast signal receiver and for sending current broadcasting data of a selected channel to the display unit, an EPG processing unit for receiving the EPG data from the broadcast signal receiver and for delivering the EPG data to the display unit when an EPG display request signal is received, and a control unit for modifying at least one of brightness and chroma of a screen displaying the broadcasting data when the EPG display request signal is received, and for controlling the display unit to display the EPG on the screen so that the displayed EPG has a different brightness or chroma than the modified brightness or chroma of the screen.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIGs. 1A to 1D are views illustrating a method for displaying an Electric Program Guide (EPG) according to exemplary embodiments of the present invention;

FIGs. 2A to 2C are views illustrating an optional display effect added to displayed items of an EPG according to exemplary embodiments of the present invention;

FIG. 3 is a block diagram illustrating a display apparatus according to an exemplary embodiment of the present invention; and

FIG. 4 is a flow diagram illustrating a method for displaying an EPG according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Furthermore, well known or widely used techniques, elements, structures, and processes may not be described or illustrated in detail to avoid obscuring the essence of the present invention. Although the drawings represent exemplary embodiments of the invention, the drawings are not necessarily to scale and certain features may be exaggerated or omitted in order to better illustrate and explain the present invention.

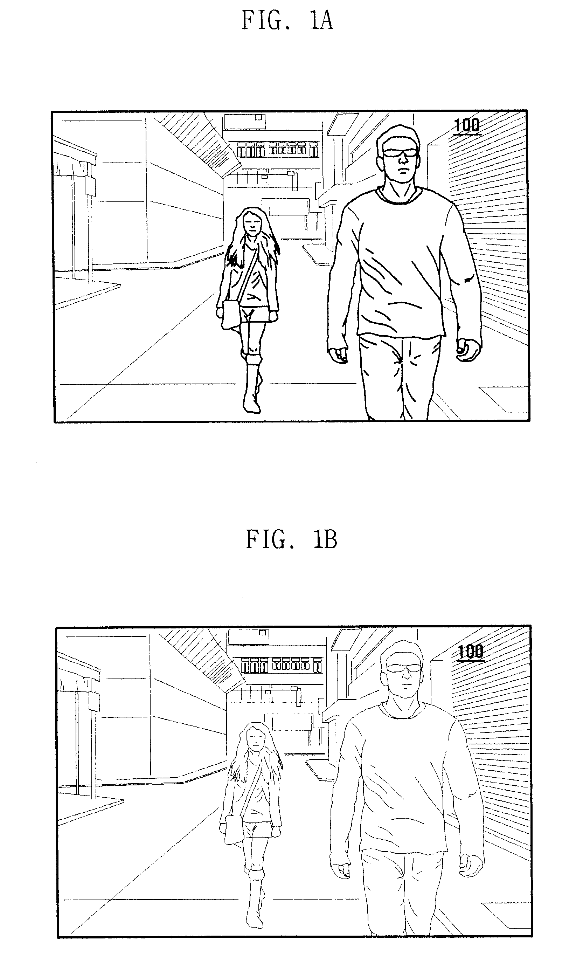

FIGS. 1A to 1D are views illustrating a method for displaying an Electric Program Guide (EPG) according to exemplary embodiments of the present invention.

Referring to FIG. 1A, a screen 100 of a display apparatus is shown on which current broadcasting data of a selected program is displayed. Here, a user can offer a request for a display of an EPG to the display apparatus (e.g., a digital broadcast receiver) by using a suitable input device such as a remote controller or a keyboard. More particularly, an exemplary embodiment of the present invention is characterized by respectively giving opposite values in brightness to the screen displaying current broadcasting data and the EPG displayed thereon, as further discussed later. As well known, brightness refers to the dimension of a color, ranging from very dim (a low brightness) to very bright (a high brightness).

Referring to FIG. 1B, the screen 100 is depicted, displaying current broadcasting data, with a modified brightness for the purpose of additionally displaying the EPG.

Here, the increasing or decreasing amount of brightness of the screen 100 may depend on a user's setting. Also, it is desirable that a modified brightness of the screen 100 has a substantially opposite value to a brightness of the EPG in order to improve recognizability and/or legibility of a displayed EPG. For example, if brightness of the screen 100 for current broadcasting data is modified to a higher value, brightness of the EPG is set to a lower value. The reverse also applies.

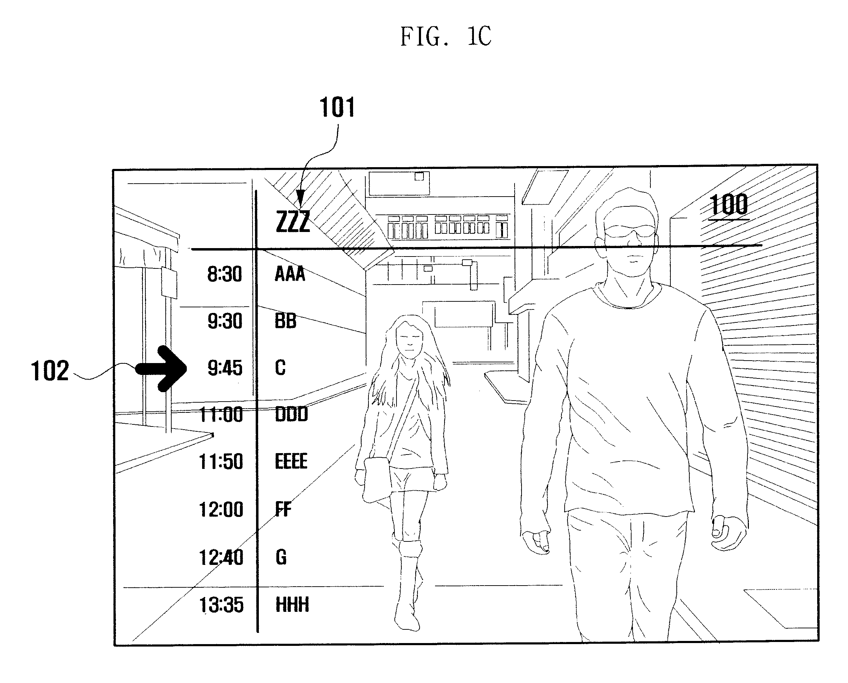

Referring to FIG. 1C, the EPG 101 overlaps the screen 100 which is displaying current broadcasting data with a modified brightness.

In one exemplary embodiment, to improve recognizability and/or legibility of the EPG 101, the screen 100 is set brightly by increasing its brightness, and the EPG 101 is displayed with a substantially opposite brightness to a modified brightness of the screen 100. For example, the screen 100 is set to a bright gray tone with an increased brightness, whereas the EPG 101 is displayed in black.

On the contrary, if the screen 100 is set to a dark gray tone with a decreased brightness, the EPG 101 has preferably an increased brightness in order to improve recognizability and/or legibility.

Additionally, as shown in FIG. 1C, the display apparatus may add an arrow-like cursor 102 to the left of a user's selected item in the EPG 101 displayed. In addition to an arrow shape, the cursor 102 may have any other shapes such as a star shape or a finger shape which can distinctively indicate a user's selected item.

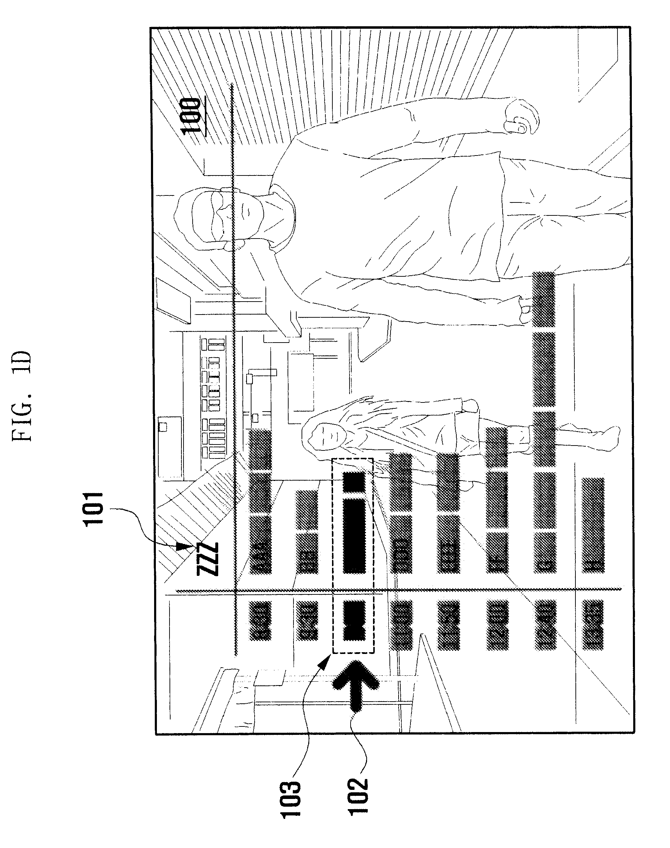

Referring to FIG. 1D, the EPG 101 with further improved recognizability and/or legibility by the border of each individual item therein is shown. Additionally, the display apparatus may give a highlight to a user's selected item or use different colors to distinguish a selected item from the other items.

As discussed above, the display apparatus improves recognizability and/or legibility of the displayed EPG by respectively giving opposite values in brightness to the screen displaying current broadcasting data and the EPG displayed thereon. This is, however, only an exemplary embodiment and is not to be considered as a limitation of the present invention. In an alternative exemplary embodiment, the display apparatus may modify chroma of the EPG rather than or in addition to brightness. For example, the display apparatus may display the EPG with a higher chroma in comparison with the screen displaying broadcasting data.

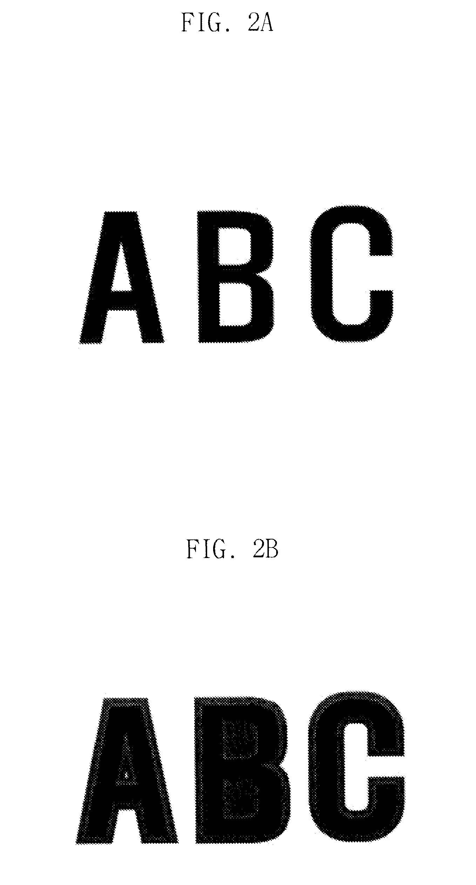

Now, a technique to represent items contained in the EPG will be described hereinafter with reference to FIGS. 2A to 2C.

FIGS. 2A to 2C are views illustrating an optional display effect added to displayed items of an EPG according to exemplary embodiments of the present invention. It is supposed in FIGs. 2A to 2C that the screen is set to a bright gray tone with a higher brightness.

Referring to FIG. 2A, a font for an EPG is displayed in a dark color. When EPG items with a dark colored font are displayed on broadcasting data with a bright gray tone of a higher brightness, a user can easily distinguish the EPG from broadcasting data. However, despite displaying the EPG by using a difference in brightness, it may be difficult to distinguish a user's selected item in the EPG. Therefore, the display apparatus may offer a border effect or a blur effect to a user's selected item in the EPG.

Alternatively, the display apparatus may offer the above effects to all items in the EPG and also use different colors to distinguish a selected item from the others.

Referring to FIG. 2B, a border effect applied to a display of the EPG is depicted. This border effect refers to an improvement in recognizability and/or legibility by giving a distinguished color to outer edges of letters or numbers in the EPG. The border effect may be applied to only a user's selected item or to all items including a selected item with a different color than other items.

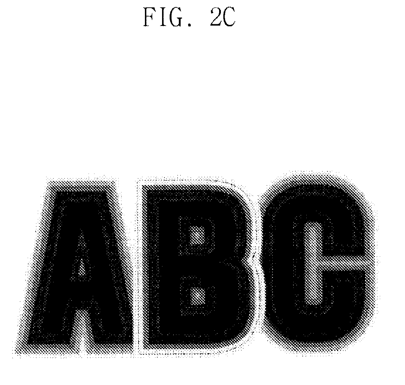

Referring to FIG. 2C, a font is depicted to which a blur effect as well as a border effect is applied. This blur effect refers to an improvement in recognizability and/or legibility by smearing outer edges of letters or numbers to become indistinct. The blur effect may be applied to only a user's selected item or to all items including a selected item with a different color than other items.

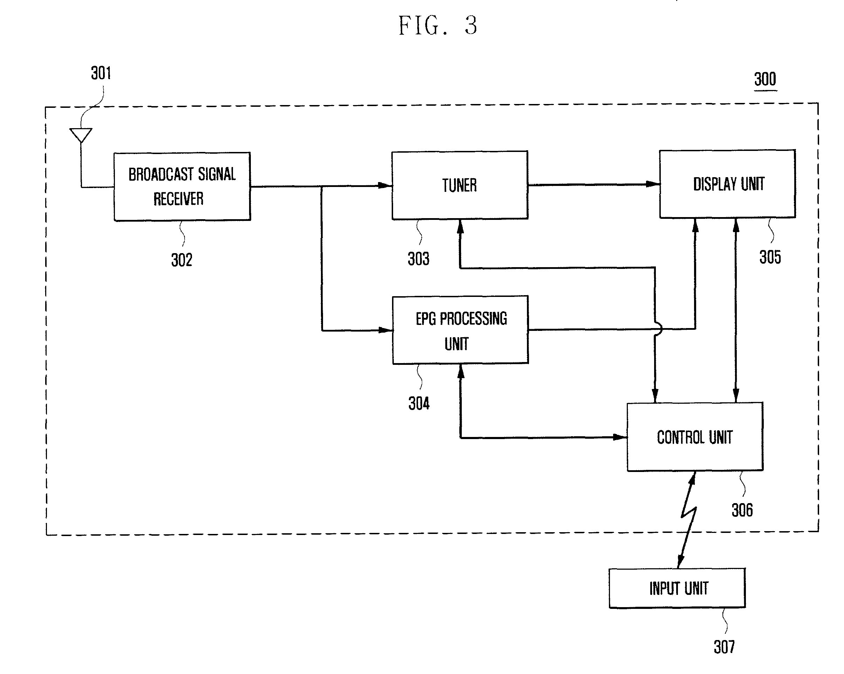

FIG. 3 is a block diagram illustrating a display apparatus according to an exemplary embodiment of the present invention.

Referring to FIG. 3, the display apparatus 300 includes an antenna 301, a broadcast signal receiver 302, a tuner 303, an EPG processing unit 304, a display unit 305, and a control unit 306.

The antenna 301 receives digital broadcast signals from broadcasting stations. Also, various kinds of cable connectors may be used in addition to or instead of the antenna 301 in order to receive digital broadcast signals.

The broadcast signal receiver 302 receives broadcast signals through the antenna 301 or cable connectors and then divides them into broadcasting data and EPG data. Additionally, the broadcast signal receiver 302 sends broadcasting data to the tuner 303 and also sends EPG data to the EPG processing unit 304.

The tuner 303 receives broadcasting data from the broadcast signal receiver 302 and delivers the received broadcasting data of a user's selected channel to the display unit 305.

The EPG processing unit 304 receives EPG data from the broadcast signal receiver 302 and delivers the received EPG data to the display unit 305 when an EPG display request signal is received from a user.

The display unit 305 processes and displays data received from the tuner 303 or the EPG processing unit 304. More particularly, the display unit 305 modifies brightness or chroma under the control of the control unit 306, and also applies the aforesaid optional display effects.

The control unit 306 controls the display unit 305 to increase or decrease brightness of the screen displaying broadcasting data when an EPG display request signal is received from a user. Additionally, the control unit 306 controls the display unit 305 to display EPG data with a different brightness with that of the screen displaying broadcasting data. Also, the control unit 306 may add a cursor to a user's selected item in displayed EPG data. Such a cursor may be located to the left of a selected item.

Furthermore, the control unit 306 controls the display unit 305 to apply the border effect to a user's selected item in EPG data and, if necessary, to further apply the blur effect in order to improve recognizability and/or legibility.

In addition, the control unit 306 may control the display unit 305 to discontinue the display of the EPG when an EPG display cancel signal is received from a user. The control unit 306 may then reestablish brightness of the screen to the state before the display request signal was received.

Meanwhile, the control unit 306 may receive any other signals such as a channel change signal or a brightness setting request signal in addition to the aforesaid EPG display request signal and EPG display cancel signal through an input unit 307 such as a remote controller or a keyboard.

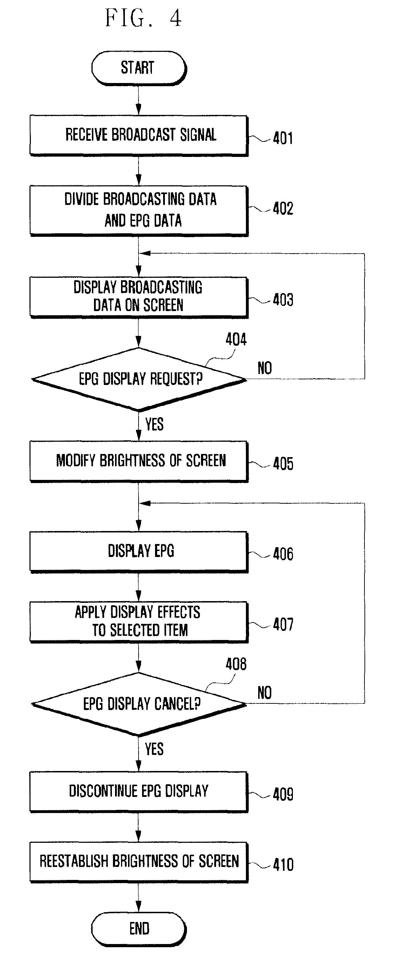

FIG. 4 is a flow diagram illustrating a method for displaying an EPG according to an exemplary embodiment of the present invention.

Referring to FIG. 4, the display apparatus receives broadcast signals in step 401 and divides the received broadcast signals into broadcasting data and EPG data in step 402. The display apparatus displays current broadcasting data on the screen in step 403.

The display apparatus determines whether an EPG display request signal is received from a user in step 404. If the display apparatus determines that the EPG display request signal is not received from the user, the process returns to the aforesaid step 403 to continuously display broadcasting data. In contrast, if the display apparatus determines that the EPG display request signal is received, the display apparatus modifies the brightness of the screen displaying the broadcasting data in step 405. For example, the display apparatus sets the screen to a bright gray tone with an increased brightness or to a dark gray tone with a decreased brightness.

The display apparatus displays EPG data on the screen in step 406. Here, a displayed EPG has a different brightness than the modified brightness of the screen displaying the current broadcasting data. Namely, if the screen is set to a bright gray tone with an increased brightness, the EPG is displayed in black with a lower brightness. Also, if the screen is set to a dark gray tone with a decreased brightness, the EPG is displayed with an increased brightness in order to improve recognizability and/or legibility.

The display apparatus applies the border effect and/or the blur effect to a user's selected item among all items in the EPG in step 407. In this step, the display apparatus may apply the border effect to each individual item of the EPG and also may distinguish a selected item from the other items by using different colors or further applying the blur effect. Additionally, the display apparatus may add a cursor to a user's selected item. As discussed above, such a cursor may have an arrow shape, star shape, a finger shape, or any other shapes distinctively indicating a user's selected item.

Thereafter, if an execution signal for a user's selected item is received, the display apparatus displays detailed information about a selected item or executes a function of a selected item.

The display apparatus determines whether an EPG display cancel signal is received from a user in step 408. If the display apparatus determines that the EPG display cancel signal is not received from the user, the process returns to the aforesaid step 406 to continuously display the EPG. In contrast, if the display apparatus determines that the EPG display cancel signal is received from the user, the display apparatus discontinues the display of the EPG in step 409 and reestablishes the brightness of the screen to the state before the display request signal was received in step 410.

As discussed herein, in order to distinctively display EPG data together with current broadcasting data, the display apparatus modifies brightness of broadcasting data and displays EPG data with a different brightness from a modified brightness of the broadcasting data. The present invention is, however, not limited to the above exemplary embodiments and also may employ a modification in chroma. More specifically, when a display of an EPG is requested, the display apparatus modifies chroma of the current broadcasting data and displays the EPG data with a different chroma from a modified chroma of broadcasting data. For example, if chroma of broadcasting data is modified to a lower value, EPG data is displayed with a higher chroma. The reverse also applies.

According to the above discussed method and apparatus according to exemplary embodiments of the present invention, it is possible to improve recognizability and/or legibility of an EPG by employing a modification in brightness or chroma when an EPG is displayed on current broadcasting data. It is also possible to further improve recognizability and/or legibility by applying the border effect or blur effect to a user's selected item in a displayed EPG.

While this invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for displaying an Electric Program Guide (EPG) on a display apparatus, the method comprising:
determining whether an EPG display request signal is received while broadcasting data is displayed;
modifying at least one of brightness and chroma of a screen displaying the broadcasting data when the EPG display request signal is received; and
displaying the EPG on the screen so that the displayed EPG has a different brightness or chroma than the modified brightness or chroma of the screen.

2. The method of claim 1, wherein, if the at least one of brightness and chroma of the screen are modified such that the at least one of brightness and chroma of a screen are reduced, the EPG is displayed on the screen with a brightness and chroma that is greater than the modified at least one of brightness and chroma of the screen.

3. The method of claim 1, wherein, if the at least one of brightness and chroma of the screen are modified such that the at least one of brightness and chroma of a screen are increased, the EPG is displayed on the screen with a brightness and chroma that is less than the modified at least one of brightness and chroma of the screen.

4. The method of claim 1, further comprising:
applying a border effect to a user's selected item in the displayed EPG so that outer edges of the user's selected item have a different color from that of the user's selected item.

5. The method of claim 4, wherein the applying of the border effect further comprises applying a blur effect to the outer edges of the user's selected item.

6. The method of claim 1, further comprising:
discontinuing the display of the EPG when an EPG display cancel signal is received; and
reestablishing brightness or chroma of the screen to a brightness or chroma of the screen from before the EPG display request signal was received.

7. The method of claim 1, further comprising:
adding a cursor to a user's selected item in the displayed EPG.

8. The method of claim 7, wherein the cursor is located adjacent to one side of the user's selected item.

9. A display apparatus, the apparatus comprising:
a display unit for simultaneously displaying broadcasting data and Electric Program Guide (EPG) data;
a broadcast signal receiver for receiving a broadcast signal and for dividing the broadcast signal into the broadcasting data and the EPG data;
a tuner for receiving the broadcasting data from the broadcast signal receiver and for sending current broadcasting data of a selected channel to the display unit;
an EPG processing unit for receiving the EPG data from the broadcast signal receiver and for delivering the EPG data to the display unit when an EPG display request signal is received; and
a control unit for modifying at least one of brightness and chroma of a screen displaying the broadcasting data when the EPG display request signal is received, and for controlling the display unit to display the EPG on the screen so that the displayed EPG has a different brightness or chroma than the modified brightness or chroma of the screen.

10. The apparatus of claim 9, wherein, if the at least one of brightness and chroma of the screen are modified by the control unit such that the at least one of brightness and chroma of a screen are reduced, the control unit controls the display unit to display the EPG on the screen with a brightness and chroma that is greater than the modified at least one of brightness and chroma of the screen.

11. The apparatus of claim 9, wherein, if the at least one of brightness and chroma of the screen are modified by the control unit such that the at least one of brightness and chroma of a screen are increased, the control unit controls the display unit to display the EPG on the screen with a brightness and chroma that is less than the modified at least one of brightness and chroma of the screen.

12. The apparatus of claim 9, wherein the control unit applies a border effect to a user's selected item in the displayed EPG so that outer edges of the user's selected item have a different color from that of the user's selected item.

13. The apparatus of claim 12, wherein the control unit applies a blur effect to the outer edges of the user's selected item.

14. The apparatus of claim 9, wherein the control unit discontinues the display of the EPG when an EPG display cancel signal is received, and reestablishes the brightness or chroma of the screen to a brightness or chroma of the screen from before the EPG display request signal was received.

15. The apparatus of claim 9, wherein the control unit adds a cursor to a user's selected item in the displayed EPG.
